# EUROPÄISCHE PATENTSCHRIFT

(11) **EP 2 635 798 B1**
(45) Veröffentlichungstag und Bekanntmachung des Hinweises auf die Patenterteilung: **17.12.2014**
(21) Anmeldenummer: 11764165.4
(22) Anmeldetag: 29.09.2011
(51) Int. Cl.: F02M 65/00

(54) **VARIABLE INJEKTORHALTERUNG**
VARIABLE INJECTOR HOLDER
PORTE-INJECTEUR VARIABLE

(30) Priorität: 09.05.2011 DE 102011075485; 03.11.2010 DE 102010043305
(43) Veröffentlichungstag der Anmeldung: 11.09.2013
(73) Patentinhaber: Robert Bosch GmbH, 70442 Stuttgart (DE)
(72) Erfinder: KORDASS, Sven, 73257 Köngen (DE); HOSS, Reinhard, 73207 Plochingen (DE)
(86) Internationale Anmeldenummer: PCT/EP2011/066992
(87) Internationale Veröffentlichungsnummer: WO 2012/059278

(56) Entgegenhaltungen:
- US-A- 3 117 444
- US-A- 5 000 043
- US-A1- 2010 024 537

## Beschreibung

### Stand der Technik

Bei der Aufspannung von Kraftstoffinjektoren für Hochdruckspeichereinspritzsysteme, so zum Beispiel das Common-Rail-Einspritzsystem in Injektorprüfständen, stehen mehrere Möglichkeiten der Einspannung der zu prüfenden Kraftstoffinjektoren in den Injektorprüfständen zur Verfügung, die abhängig von der Abdichtung des Kraftstoffinjektors in Bezug auf eine am Prüfstand positionierbare Einspritzkammer sind. Es besteht die Möglichkeit, die jeweils im Injektorprüfstand aufgenommenen Kraftstoffinjektoren in radiale Richtung in der Einsprifzkammer abzudichten oder eine Abdichtung in axiale Richtung zu bewirken.

Bei radialer Abdichtung im Düsenbereich des Kraftstoffinjektors genügt in der Regel eine Fixierung des Kraftstoffinjektors innerhalb des Injektorprüfstandes im oberen Bereich, da in diesem Falle keine Axialkraft auftritt. Die Fixierung des Kraftstoffinjektors im oberen Bereich erfolgt zum Beispiel durch einfaches Anklemmen des Kraftstoffinjektors an einer Prüfdruckleitung, die den am Injektorprüfstand eingespannten Prüfling mit Systemdruck beaufschlagt. Andere Konzepte sehen ein Verklemmen des Kraftstoffinjektors an dessen Injektorkörper mittels einer geschlitzten Rundbuchse oder schraubstockähnliche Klemmbacken mit V-förmigem Ausschnitt vor.

Bei einer axialen Abdichtung des Kraftstoffinjektors, die in der Regel an der Düsenspannmutter des Kraftstoffinjektors erfolgt und eine Einbaulage wie später im Kraftfahrzeug, d.h. an der Verbrennungskraftmaschine darstellt, ist die erforderliche Dichtkraft an der Halterung in axiale Richtung in Gegenrichtung aufzubringen. Der Kraftstoffinjektor wird an seiner Schlüsselfläche, so zum Beispiel an der Düsenspannmutter nach unten gespannt bzw. dort auch die erforderliche Gegenkraft aufgebracht. Beim Herunterdrücken des Kraftstoffinjektors in axiale Richtung über die Spannfläche, wird in der Regel eine injektorspezifische Spannpratze in eine Aufnahme angebracht und der Kraftstoffinjektor über das Anziehen der Spannpratze nach unten gegen die axiale Dichtung gedrückt.

In vielen Fällen wird an Injektorprüfständen eine in der Regel positionierbare ausgebildete Einspritzkammer eingesetzt, die auf pneumatischem Wege oder über ein Anzuggewinde gegen den Kraftstoffinjektor gedrückt wird und an der Schlüsselfläche gehalten wird. Die Halterung der am Injektorprüfstand verschieblich aufgenommenen, d.h. variabel positionierbaren Einspritzkammer, wird in der Regel durch unterschiedliche injektorspezifisch ausgebildete Adapter oder Halteplatten, die am Injektorprüfstand befestigt werden, realisiert.

Die vorgeschlagenen Injektorprüfstände benötigen allesamt unterschiedliche jeweils injektorspezifische Halteplatten, Adapter bzw. Klemnieinrichtungen entsprechend der Varianten zahl der an einem Injektorprüfstand zu prüfenden Prüflinge, d.h. entsprechend der Variantenanzahl der zu überprüfenden Kraftstoffinjektoren, was einen höchst unbefriedigenden Zustand darstellt (s.z.B. US2010/0024537).

### Darstellung der Erfindung

Erfindungsgemäß wird ein Injektorprüfstand vorgeschlagen, der sich einerseits durch eine erhebliche Reduzierung der erforderlichen Einzelteile auszeichnet und andererseits eine sehr einfache Handhabung gewährleistet. Der erfindungsgemäß vorgeschlagene Injektorprüfstand umfasst eine variable Injektorhalterung, die eine Halteplatte umfasst, die einen in dieser verdrehbaren Einsatz umschließt. Der verdrehbare Einsatz der variablen Injektorhalterung ist so ausgestaltet, dass sich dessen Mantelfläche relativ zur Innenfläche einer Aussparung der stationären Halteplatte bewegt, d.h. eine Verdrehung des verdrehbaren Einsatzes innerhalb der Halteplatte der variablen Injektorhalterung möglich ist, ohne dass die beiden relativ zueinander beweglichen Teile separiert werden. Eine Verdrehung des verdrehbaren Einsatzes relativ zur stationär aufgenommenen Halteplatte ist im Uhrzeigersinn und im Gegenuhrzeigersinn möglich.

Durch die erfindungsgemäß vorgeschlagene Lösung werden die vielen derzeit eingesetzten unterschiedlichen injektorspezifischen Halteplatten bzw. erforderlichen Adapter, die je nach Anzahl der zu prüfenden Kraftstoffinjektoren vorgehalten werden müssen, ersetzt. Dadurch ist eine erhebliche Kosteneinsparung durch Verwendung der variablen Injektorhalterung anstelle von unterschiedlichen Halteeinrichtungen allein für Pkw-Kraftstoffinjektoren erreichbar. Des Weiteren kann Lagerraum eingespart werden und es ergibt sich aufgrund einer beträchtlichen Reduzierung der erforderlichen Bauteile eine erheblich bessere Übersicht. Durch die drehbare Anordnung, d.h. die Positionierung des drehbaren Einsatzes innerhalb der Aussparungen der Halteplatte, lässt sich der zu prüfende Kraftstoffinjektor in einem jeden Winkel im Uhrzeigersinn oder entgegen des Uhrzeigersinns positionieren, was insbesondere beim Anschließen von starren Stahlleitungen, in denen der Prüfdruck ansteht, von erheblichem Vorteil ist. Bei den bisher eingesetzten Lösungen mit verstellbaren Klemmbacken, bei denen eine Verdrehbewegung im Uhrzeigersinn oder im Gegenuhrzeigersinn nicht möglich ist, kann dies nicht realisiert werden.

Optional können die stationäre Halteplatte und der verdrehbare Einsatz der variablen Injektorhalterung mit Gewinden miteinander verbunden werden. Die Halteplatte wird dazu mit einem Innengewinde und der verdrehbare Einsatz mit einem entsprechenden Außengewinde versehen. Die Anordnung bleibt dabei weiterhin drehbar, und erlaubt gegenüber den bisher eingesetzten Lösungen eine Verstellung der Höhe der Klemmbacken. Die Kopplung der Verdrehbewegung mit der Höhen bzw. Vertikalverstellung kann durch die Aufnahme eines Gewinderings zwischen der stationären Halteplatte und dem verdrehbaren Einsatz aufgehoben werden, so dass eine unabhängige Einstellung der Verdrehung und der Höhe der Klemmbacken möglich ist.

In vorteilhafter Weise sind auf einer Stirnseite des verdrehbaren Einsatzes, der von der stationären Halteplatte aufgenommen ist, Klemmbacken aufgenommen. Es besteht die Möglichkeit, auf dem verdrehbaren Einsatz eine relativ verstellbare Klemmbacke anzuordnen oder bevorzugt beide Klemmbacken am verdrehbaren Einsatz derart anzuordnen, dass beide Klemmbacken relativ zum verdrehbaren Einsatz in horizontale Richtung bewegbar sind. Bevorzugt werden die Klemmbacken am verdrehbaren Einsatz schwimmend gelagert, so dass der zu prüfende Kraftstoffinjektor in der Mitte der Aussparungen von stationärer Halteplatte und verdrehbarem Einsatz positioniert werden kann. Werden schraubstockähnlich angeordnete verstellbare Klemmbacken einander gegenüberliegend angeordnet, ist die Position der Längsachse des Kraftstoffinjektors vom Durchmesser des Kraftstoffinjektors abhängig. Dadurch würde bei herkömmlichen Injektorprüfständen eine nur lineare Führung der Einspritzkammer in vertikale Richtung nicht mehr ausreichend sein, so dass ein zusätzlicher Bewegungsfreiheitsgrad für die in der Regel vertikal positionierbare Einspritzkammer am Injektorprüfstand notwendig wäre. Dies kann durch die erfindungsgemäß vorgeschlagene Lösung einer schwimmenden Lagerung der Klemmbacken am verdrehbaren Einsatz vermieden werden.

Bevorzugt wird die variable Injektorhalterung derart ausgebildet, dass diese die stationäre Halteplatte sowie den in dieser aufgenommenen relativ zur Halteplatte verdrehbaren Einsatz umfasst. Beide Komponenten, d.h. die stationäre Halteplatte, der verdrehbare Einsatz umfassen jeweils eine durchgängige Aussparung in U-Form, an deren offenen Ende der Kraftstoffinjektor in der variablen Injektorhalterung positionierbar ist, d.h. durch die offene Seite in diese eingeschoben wird. An der Oberseite des drehbaren Einsatzes befinden sich die schwimmend gelagerten, zueinander verstellbaren Klemmbacken. Aufgrund der schwimmenden Lagerung lässt sich eine Schlüsselweite, d.h. der Abstand, in dem die schraubstockähnlich konfigurierten Klemmbacken in Bezug aufeinander auseinander liegen, stufenlos einstellen. Die Verstellung erfolgt vorzugsweise durch eine Spannschraube mit Passung, über welche die beiden Klemmbacken miteinander verbunden und gegeneinander verspannbar sind. Durch Verdrehung des drehbaren Einsatzes im Uhrzeigersinn oder entgegen des Uhrzeigersinns, lässt sich der zu prüfende Kraftstoffinjektor variabel positionieren, was insbesondere dessen Verbindung mit einer Prüfdruckleitung, die starr ausgebildet sein kann, erheblich erleichtert.

Durch die erfindungsgemäß vorgeschlagene Lösung entfallen die Halteplatten mit unterschiedlichen Breiten und Winkeln, über welche der zu prüfende Kraftstoffinjektor andernfalls so zu positionieren wäre, dass eine starre, zum Beispiel aus Stahl gefertigte Prüfdruckleitung angeschlossen werden könnte.

### Kurze Beschreibung der Zeichnungen

Anhand der Zeichnung wird die Erfindung nachstehend eingehender beschrieben.
- Figur 1: die schematische Ansicht eines Injektorprüfstands,
- Figur 2: eine variable Injektorhalterung,
- Figur 3: eine Explosionsdarstellung eines Teiles der variablen Injektorhalterung gemäß Figur 2,
- Figur 4: eine Darstellung von Halteplatte und verdrehbarem Einsatz als voneinander getrennte Teile,
- Figuren 5.1, 5.2: unterschiedliche Horizontalverschiebungsmöglichkeiten,
- Figuren 6.1 und 6.2: eine Horizontalverspannung,
- Figuren 7.1, 7.2: eine Horizontalverdrehung in entgegen des Uhrzeigersinns und im Uhrzeigersinn,
- Figuren 8.1 bis 8.3: Darstellungen der variablen Injektorhalterung von der Unterseite, von der Oberseite und im Querschnitt,
- Figuren 9 und 9.1: eine Seitenansicht der variablen Injektorhalterung mit Schnittdarstellung,
- Figur 10: eine Darstellung einer weiteren Ausführungsform von Halteplatte und verdrehbarem Einsatz,
- Figuren 11.1 und 11.2: verschiedene vertikale Verstellmöglichkeiten,
- Figur 12: Darstellung einer weiteren Ausführungsform von Halteplatte und verdrehbarem Einsatz, bei der zusätzlich ein Gewindering aufgenommen ist,
- Figuren 13.1 und 13.2: verschiedene vertikale Verstellmöglichkeiten der Ausführungsform nach Figur 12.

### Ausführungsvarianten

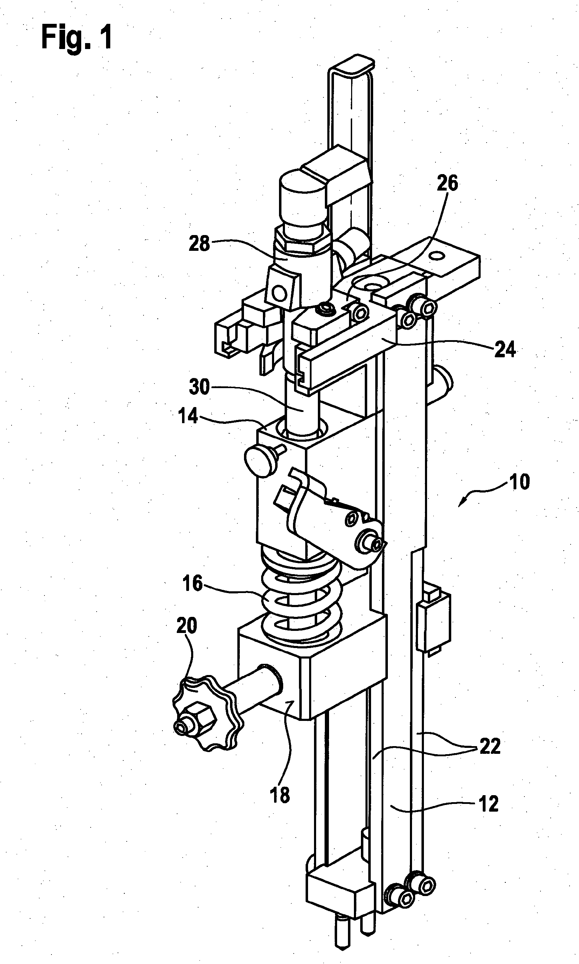

Der Darstellung gemäß Figur 1 ist ein Injektorprüfstand zu entnehmen.

Aus der Darstellung gemäß Figur 1 geht hervor, dass ein Injektorprüfstand 10 mit einer Haltevorrichtung 12 dargestellt ist, an der eine in vertikale Richtung variabel positionierbare Einspritzkammer 14 aufgenommen ist. Aus der Darstellung gemäß Figur 1 geht hervor, dass die variabel positionierbare Einspritzkammer 14 eine Anstellfeder 16 umfasst, die zwischen der Einspritzkammer 14 und einer Feststellvorrichtung 18 angeordnet ist. Relativ zur Einspannposition des zu prüfenden Kraftstoffinjektors 28 lässt sich die variabel positionierbare Einspritzkammer 14 durch die Feststellvorrichtung 18 mittels einer Knebelschraube 20 in vertikale Richtung gesehen variabel positionieren. Die Feststellvorrichtung 18 ist an Führungsprofilen 22 geführt, die sich in vertikale Richtung entlang der Haltevorrichtung 12 des Injektorprüfstandes 10 erstrecken. Entsprechend der Anstellung der Feststellvorrichtung 18, der Wirkung der Anstellfeder 16 lässt sich zwischen der Einspritzkammer 14 und der Einspritzdüse des zu prüfenden Kraftstoffinjektors 28 eine Abdichtung in axiale Richtung einstellen. Aus der Darstellung gemäß Figur 1 geht des Weiteren hervor, dass der dort dargestellte Injektorprüfstand 10 eine Aufnahme 24 umfasst. In der Aufnahme 24 befindet sich die variable Injektorhalterung 26, in der der zu prüfende Kraftstoffinjektor 28 in der Darstellung gemäß Figur 1 eingespannt ist.

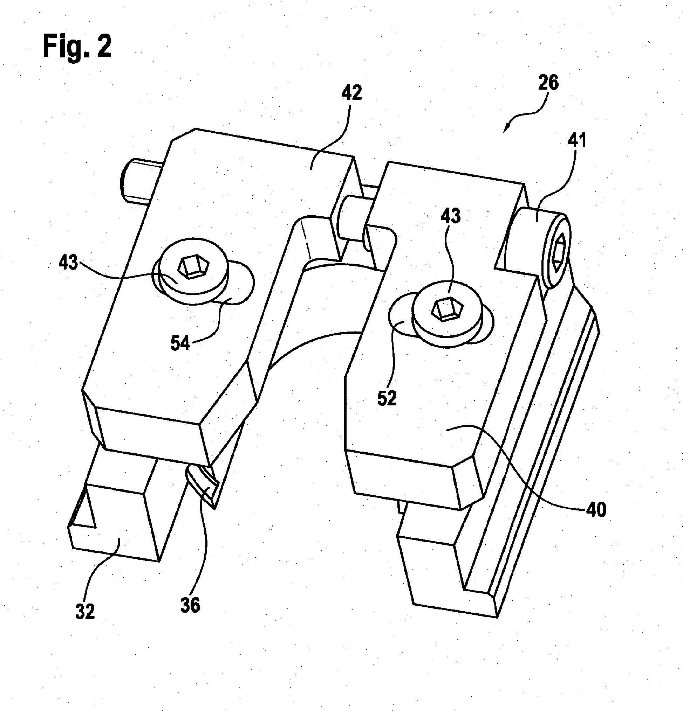

Figur 2 zeigt eine perspektivische Wiedergabe der variablen Injektorhalterung, wie sie am Injektorprüfstand gemäß Figur 1 eingesetzt wird.

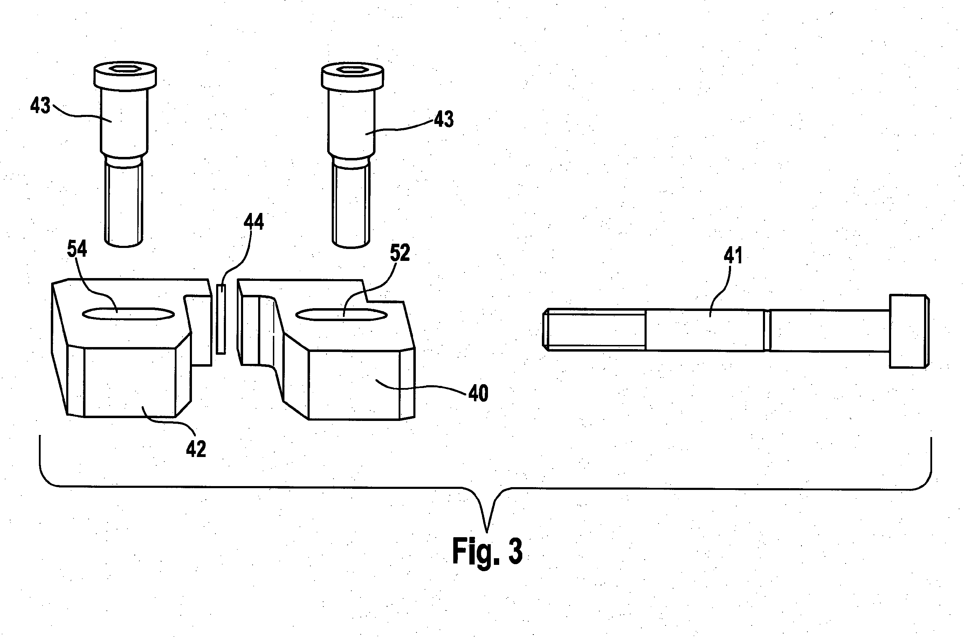

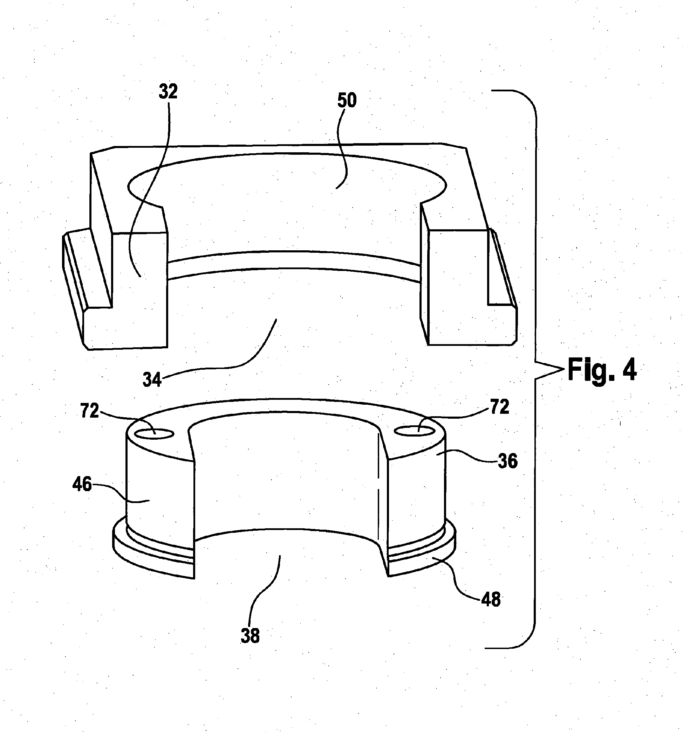

Aus der perspektivischen Darstellung gemäß Figur 2 ergibt sich, dass die variable Injektorhalterung 26 eine stationäre Halteplatte 32 umfasst, von der ein verdrehbarer Einsatz 36 umschlossen ist. Sowohl die stationäre Halteplatte 32 als auch der in dieser aufgenommene verdrehbare Einsatz 36 umfassen jeweils eine Aussparung, wie der Darstellung gemäß Figur 4 zu entnehmen ist. Der Darstellung gemäß Figur 2 lässt sich entnehmen, dass sich an der Oberseite des verdrehbaren Einsatzes 36 eine erste Klemmbacke 42 sowie eine zweite Klemmbacke 40 befinden. Die beiden Klemmbacken 40, 42 liegen einander schraubstockähnlich gegenüber. Eine jede der Klemmbacken 40 bzw. 42 ist über eine Führungsschraube 43 oder ein anderes geeignetes Befestigungsmittel mit dem in Figur 2 nur teilweise dargestellten verdrehbaren Einsatz 36 verbunden. Sowohl die erste Klemmbacke 40 als auch die zweite Klemmbacke 42 umfassen jeweils langlochförmig ausgebildete Öffnungen 52, 54, durch die sich die Führungsschrauben 43 jeweils erstrecken. Aus der Darstellung gemäß Figur 2 geht hervor, dass die beiden Klemmbacken 40, 42 durch eine sich durch beide Klemmbacken 40, 42 erstreckende Spannschraube 41 gegeneinander verspannbar sind. Optional kann zwischen den beiden Klemmbacken 40, 42 im Durchgangsbereich der Spannschraube 41 ein Sprengring oder eine Eirilegscheibe aufgenommen sein, vergleiche Explosionsdarstellung gemäß Figur 3.

Figur 2 zeigt, dass die beiden Führungsschrauben einen Werkzeugansatz aufweisen, der zum Beispiel als Innensechskant oder dergleichen ausgebildet sein kann. Des Weiteren besteht die Möglichkeit hier auch im Hinblick auf eine Automatisierung, Torxansätze oder dergleichen vorzusehen.

Entsprechend der Horizontalerstreckung in langlochförmig ausgebildeten Öffnungen 52, 54 in den beiden Klemmbacken 40 oder 42 ergibt sich ein horizontaler Verstellweg der Klemmbacken in Bezug auf den von der stationären Halteplatte 32 umschlossenen verdrehbaren Einsatz 36.

Figur 3 zeigt eine Explosionsdarstellung der Klemmbacken, der Führungsschrauben sowie der Spannschraube.

Figur 3 zeigt, dass die Führungsschrauben 43, mit denen die Klemmbacken 40, 42 am verdrehbaren Einsatz 36 fixiert und insbesondere positioniert werden, erst im unteren Abschnitt ein Gewinde aufweisen, welches in korrespondierende Gewinde 42 am verdrehbaren Einsatz 36 eintaucht. Im oberen Bereich sind die Führungsschrauben 43 schaftförmig ausgebildet, so dass eine eng tolerierte Führung zwischen den Führungsschrauben 43 und den die langlochförmigen Öffnungen 52, 54 begrenzenden Seitenwänden in den Klemmbacken 40, 42 sichergestellt ist. Figur 3 zeigt darüber hinaus, in welcher Länge die Spannschraube 41 ausgebildet ist, die sich durch entsprechend konfigurierte Öffnung bzw. Gewinde der Klemmbacken 40, 42 erstreckt. Der Explosionsdarstellung gemäß Figur 3 ist insbesondere auch entnehmbar, dass sich zwischen den Klemmbacken 40 und 42 die Einlegscheibe 44 bzw. ein Sprengring oder dergleichen befindet.

Figur 4 zeigt in explosionsartiger Darstellung die hier separierte voneinander dargestellten Komponenten Halteplatte und verdrehbarer Einsatz der variablen Injektorhalterung.

Wie der Darstellung gemäß Figur 4 zu entnehmen ist, weist sowohl die stationäre Halteplatte 32 eine Aussparung 34 auf, als auch der verdrehbare Einsatz 36, vergleiche Bezugszeichen 38. Die beiden Aussparungen 34, 38 fluchten miteinander und sind im Wesentlichen U-förmig ausgebildet, wobei die jeweils offenen Seiten der Aussparung 34, 38 übereinander stehen, so dass der Kraftstoffinjektor 28 durch diese offene Seite in die variable Injektorhalterung 26, die an der Aufnahme 24 des Injektorprüfstandes 10 befestigt ist, eingeschoben werden kann. Wie aus der Darstellung gemäß Figur 4 hervorgeht, berühren eine Mantelfläche 46 des verdrehbaren Einsatzes 36 und eine Innenfläche 50 der stationären Halteplatte 32 einander. Der verdrehbare Einsatz 36 wird bis zur Anlage eines umlaufenden oder teilweise umlaufend ausgebildeten Bundes 48 in die Aussparung 34 der stationären Halteplatte 32 eingeschoben und lässt sich relativ zu dieser verdrehen. Aus der Darstellung gemäß Figur 4 geht hervor, dass einander gegenüberliegend in den Schenkeln des verdrehbaren Einsatzes 36, die die Aussparung 38 begrenzen, Gewinde 72 ausgebildet sind, in welche die Führungsschrauben 43, vergleiche Darstellungen gemäß der Figuren 2 und 3 eingeschraubt werden.

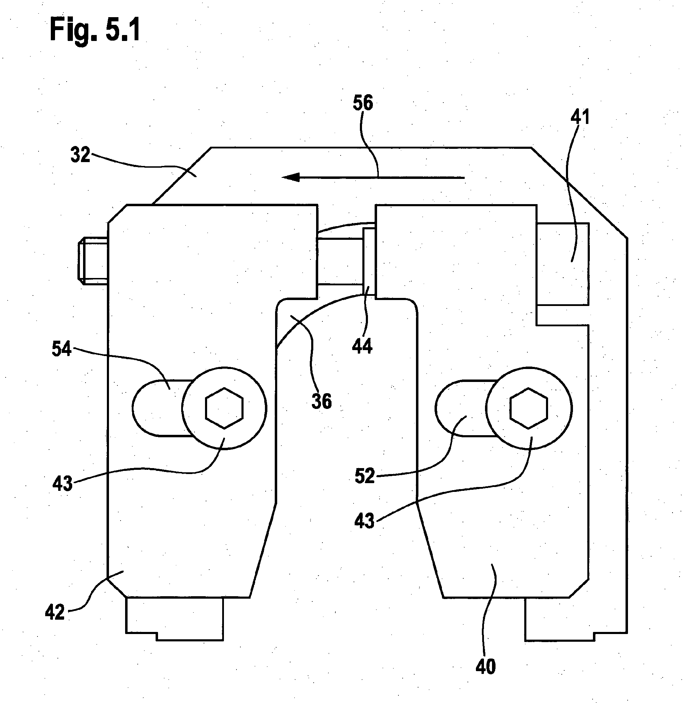

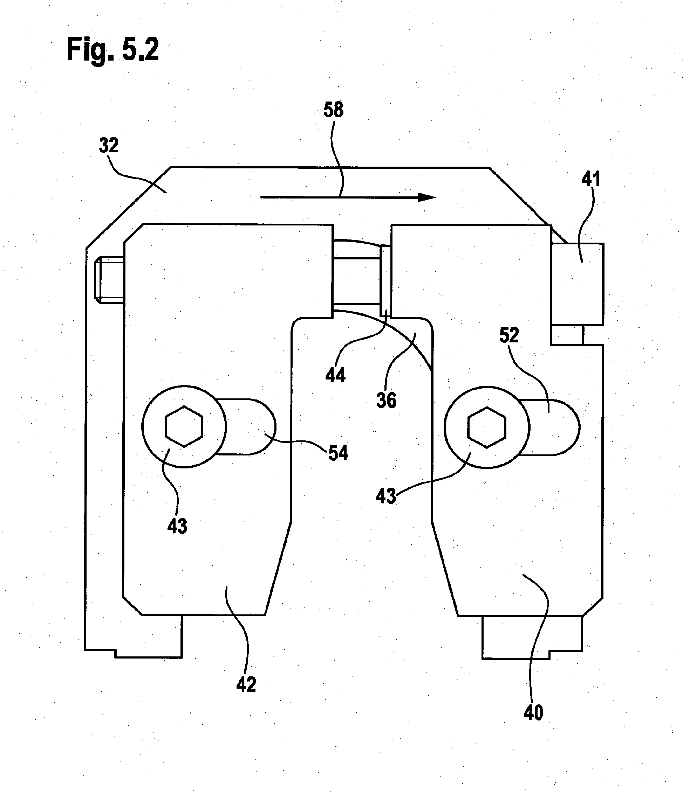

Den Figuren 5.1 und 5.2 sind Horizontalverschiebungen der Klemmbacken der variablen Injektorhalterung 26 zu entnehmen.

Aus der Darstellung gemäß Figur 5.1 geht hervor, dass zur Erzielung einer ersten Horizontalverschiebung 56 die erste Klemmbacke 40 nach Lösen der Führungsschräube 43 in der ersten langlochförmigen Öffnungen 52 maximal nach links verschoben ist, so dass die erste Klemmbacke 40 in Bezug auf die sich in ihrer Ursprungsposition befindliche zweite Klemmbacke 42 an diese angestellt ist. Der Darstellung gemäß Figur 5.2 ist demgegenüber zu entnehmen, dass es sich hier genau umgekehrt verhält. Zur Realisierung einer zweiten Horizontalverschiebung 58, befindet sich die erste Klemmbacke 40 in ihrer Ursprungs-, d.h. Maximalposition in Bezug auf die Aussparungen 34, 38, wohingegen die zweite Klemmbacke 42 nach Lösen der Führungsschraube 43 und Verschiebung derselben relativ zum verdrehbaren Einsatz 36 um ihren maximalen Stellweg nach rechts verschoben ist, so dass sich eine zur ersten Horizontalverschiebung 56 gemäß Figur 1 entgegengesetzte zweite Horizontalverschiebung 58 ergibt.

In beiden in Figur 5.1 und 5.2 dargestellten Fällen besteht nunmehr die Möglichkeit, nach Anziehen der Spannschraube 41 die beiden Klemmbacken 40 bzw. 42 gegeneinander vorzuspannen.

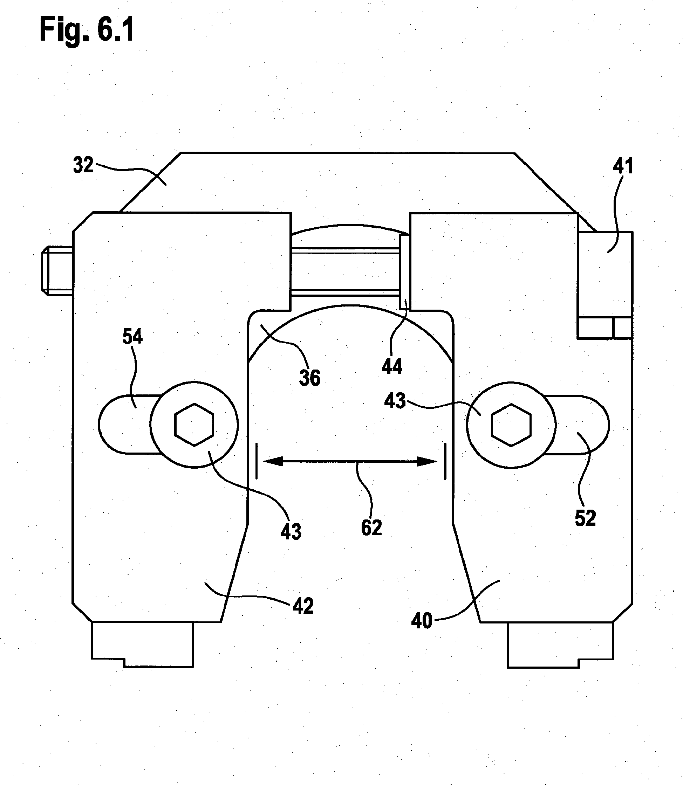

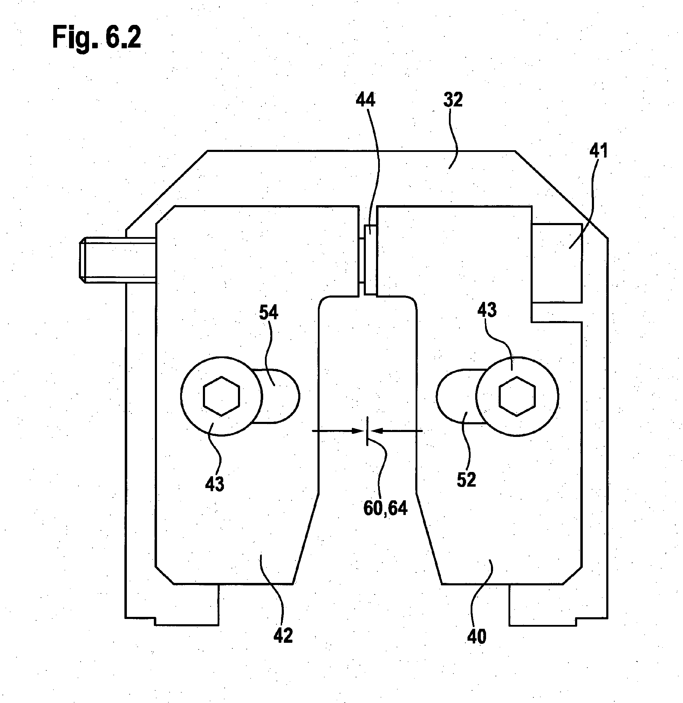

Der Darstellung gemäß Figur 6.1 und 6.2 ist eine Verspannung der Klemmbacken in Bezug aufeinander zu entnehmen.

Figur 6.1 gibt die Klemmbacken 40 bzw. 42 der variablen Injektorhalterung 26 in einer Offenstellung 62 wieder. In der Offenstellung 62 gemäß Figur 6.1 befinden sich die beiden Klemmbacken 40 bzw. 42 maximal voneinander zurückgestellt, so dass sich ein Maximalabstand in der Offenstellung 62 zwischen den Innenseiten der einander zuweisenden Klemmbacken 40 bzw. 42 ergibt. Figur 6.2 zeigt eine Verspannung 60 und damit einhergehende Spannstellung 64, in welcher die Innenseiten der Klemmbacken 40 bzw. 42 maximal möglich gegeneinander verspannt sind. Beim Anziehen der die beiden Klemmbacken 40 bzw. 42 durchsetzende Spannschraube 41 fahren diese geführt durch die Führungsschrauben 43 in den langlochförmigen Ausnehmungen 42, 44 aufeinander zu, solange bis der in Figur 6.1 und 6.2 dargestellte Kraftstoffinjektor 28 gleichmäßig geklemmt ist und zentrisch in den Aussparungen 34 und 38 von der Halteplatte 32 und des verdrehbaren Einsatzes 36 positioniert ist.

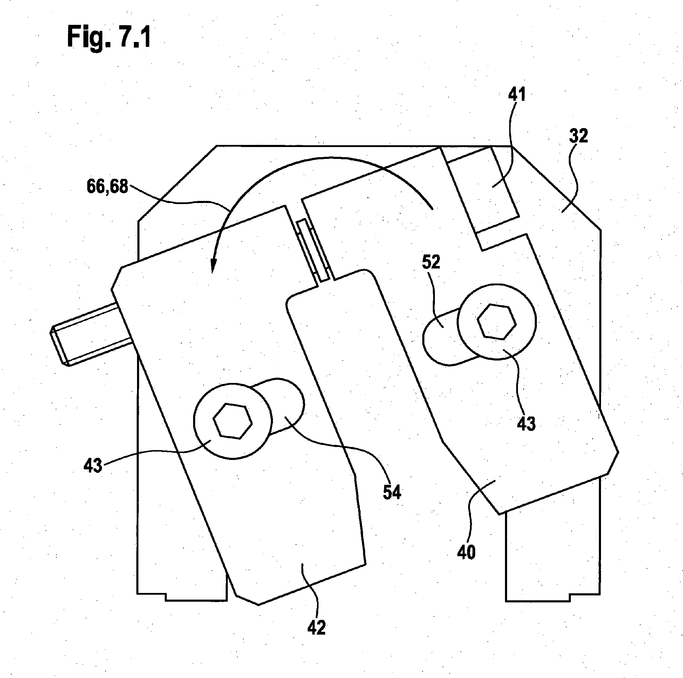

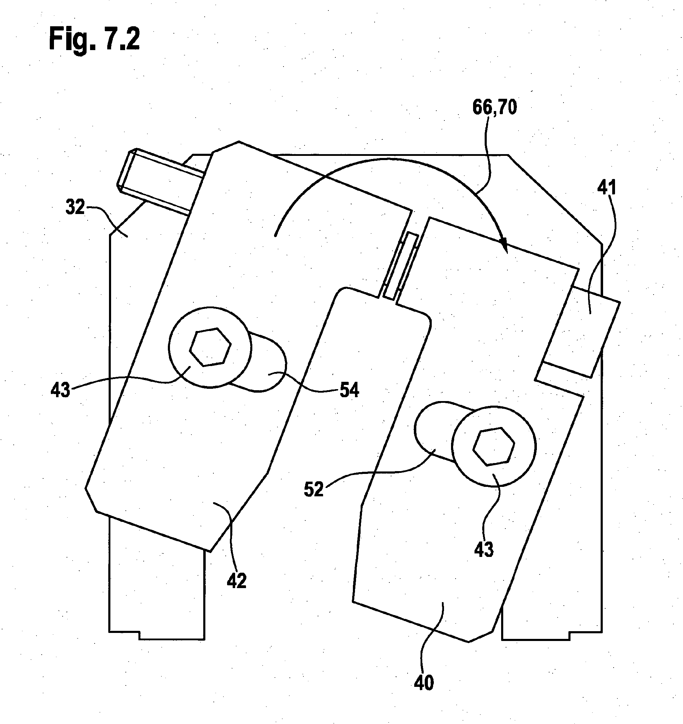

Den Figuren 7.1 und 7.2 ist zu entnehmen, dass die beiden Klemmbacken 40 bzw. 42, die über die Führungsschrauben 43 am verdrehbaren Einsatz 36 aufgenommen sind, in einem ersten Drehsinn 68 in Horizontalverdrehung 66 im Gegenuhrzeigersinn vollführen. Dazu wird der verdrehbare Einsatz 36 in der stationären Halteplatte 32 entgegen des Uhrzeigersinns im ersten Drehsinn 68 verdreht. Durch diese Ausführungsvariante lässt sich in vorteilhafter Weise ein leichter Anschluss zwischen dem von den Halteplatten 40 bzw. 42 geklemmten Kraftstoffinjektor 28 und einer aus Stahl beispielsweise gefertigten Druckleitung, die den Prüfdruck führt, gewährleisten.

Figur 7.2 zeigt demgegenüber, dass die Klemmbacken 40, 42, die über die Führungsschrauben 43 am verdrehbaren Einsatz 36 fixiert sind, eine Horizontalverdrehung 66 ausgeführt hat, im Uhrzeigersinn, d.h. im zweiten Drehsinn 70 verläuft.

Die Verdrehmöglichkeiten des verdrehbaren Einsatzes 36 der variablen Injektorhalterung 26 vereinfachen einerseits die Handhabung des Injektorprüfstandes 10 mit variabler Injektorhalterung 26 und ermöglichen eine schnelle Montage bzw. Demontage sowie Justierungsarbeiten, die beim Anschließen zwischen des zu prüfenden Kraftstoffinjektors 28 an den Injektorprüfstand 10 durchzuführen sind.

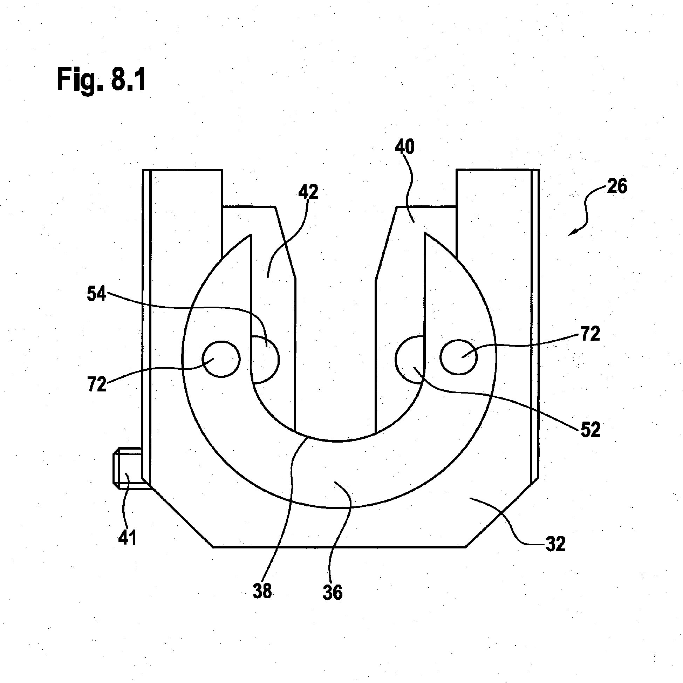

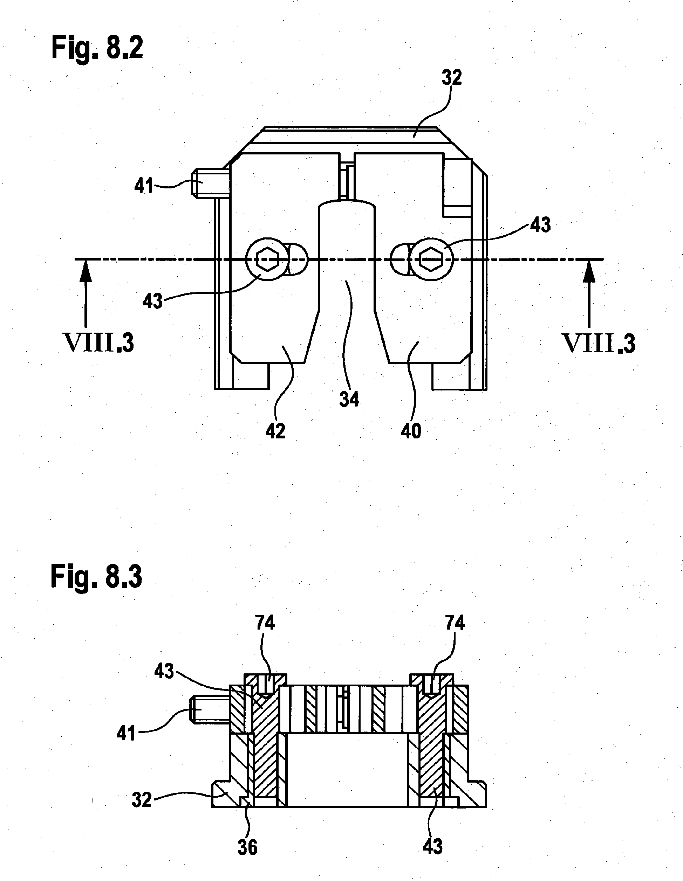

Den Figuren 8.1, 8.2 und 8.3 ist die variable Injektorhalterung in Unteransicht, in Schnittdarstellung und in der Draufsicht zu entnehmen.

Figur 8.1 zeigt die variable Injektorhalterung 26 von der Unterseite her. Der verdrehbare Einsatz 36 ist spielfrei in der stationären Halteplatte 32 geführt. Aufgrund der Spielfreiheit ist eine präzise Verdrehung auch um wenige Winkelgrade zwischen dem verdrehbaren Einsatz 36 und der Halteplatte 32 möglich. Aus der Ansicht gemäß Figur 8.1 geht hervor, dass die Gewinde 72 in den Schenkeln des verdrehbaren Einsatzes 36 einander im Wesentlichen gegenüberliegen. Teile der Klemmbacken 40 bzw. 42 samt der in diesen ausgebildeten langlochförmig konfigurierten Öffnung 52, 54 sind in der Unteransicht gemäß Figur 8.1 ebenfalls noch erkennbar.

Der Draufsicht gemäß Figur 8.2 lässt sich entnehmen, dass in diesem Zustand die Klemmbacken 40 bzw. 42 oberhalb der Aussparung 34 der stationären Halteplatte 32 maximal zusammengeschoben sind, so dass sich ein minimaler Abstand zwischen den Innenseiten der Klemmbacken 40 bzw. 42 einstellt. Die in Figur 8.2 dargestellte Positionierung der Klemmbacken 40 bzw. 42 ermöglicht eine Fixierung von Kraftstoffinjektoren 28 mit geringem Durchmesser.

Die Spannschraube 41 ist maximal angezogen, so dass sich der minimale Abstand zwischen den Innenseite der Klemmbacken 40 bzw. 42 ergibt.

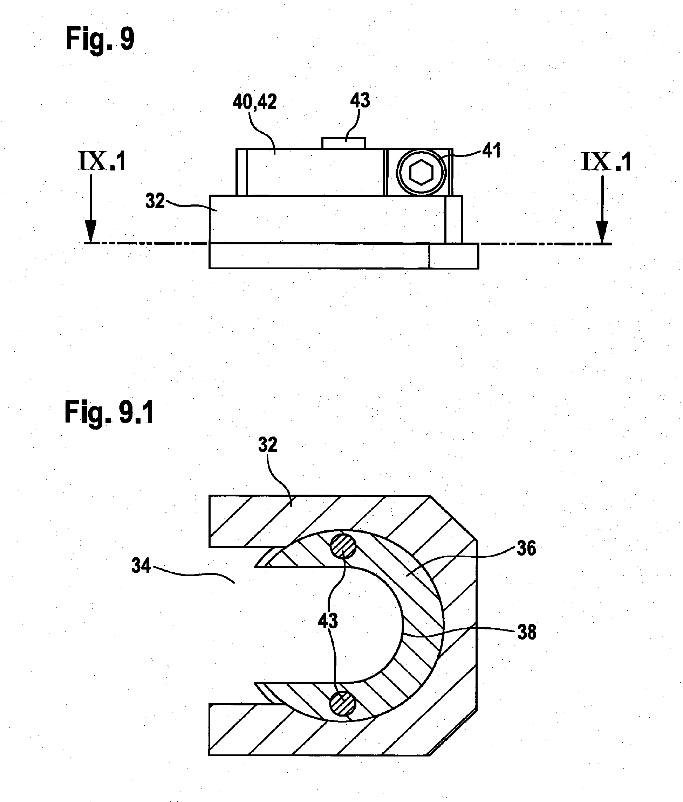

Der Darstellung gemäß der Figuren 9 und 9.1 ist eine Seitenansicht der variablen Injektorhalterung zu entnehmen.

Figur 9 zeigt, dass die variable Injektorhalterung 26 relativ flach baut. An der oberen Seite der stationären Halteplatte 32 der variablen Injektorhalterung 26 finden sich die in der Seitenansicht dargestellten Klemmbacken 40 bzw. 42, die durch die Führungsschrauben 43 in einem Relativabstand zueinander am verdrehbaren Einsatz 36 positioniert sind. Über die Spannschraube 41 werden die Klemmbacken 40 bzw. 42 gegeneinander angestellt und fixieren einen zwischen diesen eingespannten Kraftstoffinjektor 28 an dessen Mantelfläche. Die Schnittdarstellung gemäß Figur 9.1 zeigt, dass die stationäre Halteplatte 32 der variablen Injektorhalterung 26 den verdrehbaren Einsatz 36 U-förmig umschließt. Sowohl die Aussparung 38, die durch die offenen Schenkel des verdrehbaren Einsatzes 36 begrenzt ist, als auch die Aussparung 34 der stationären Halteplatte 32 fluchten miteinander, so dass der zu prüfende Kraftstoffinjektor 28 durch die offene Seite der beiden Aussparungen 34, 38 in die variable Injektorhalterung 26 eingeschoben werden kann.

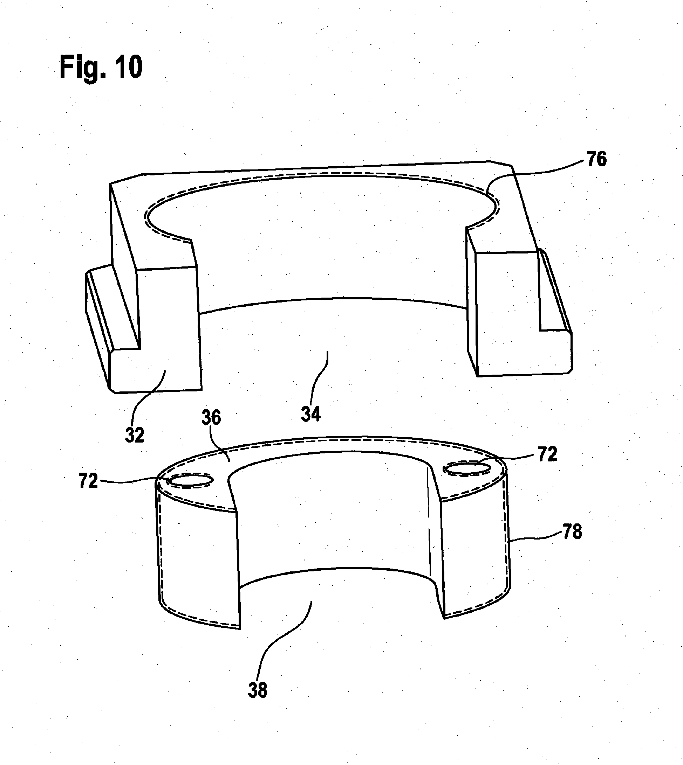

Der Darstellung der Figur 10 ist eine weitere Ausführungsform der stationären Halteplatte 32 und des verdrehbaren Einsatzes 36 zu entnehmen.

In Figur 10 ist eine stationäre Halteplatte 32 mit der Aussparung 34 dargestellt. Die Innenfläche der stationären Halteplatte 32 ist mit einem Innengewinde 76 versehen, welches einen mit einem Außengewinde 78 versehenen verdrehbaren Einsatz 36 aufnimmt. Der verdrehbare Einsatz 36 weist eine Aussparung 38 auf und kann vollständig oder teilweise in die Halteplatte 32 eingeschraubt werden. Durch ein nur teilweises Einschrauben lässt sich die Höhe der variablen Injektorhalterung einstellen. Dies erlaubt eine Verstellung der Vertikalposition eines eingespannten Kraftstoffinjektors 28 unabhängig von den Verstellmöglichkeiten der Einspritzkammer 14. Die Vertikalverschiebung pro Umdrehung entspricht der Steigung des Gewindes. Diese kann durch die Wahl des Gewindetyps, wie beispielsweise Grob oder Feingewinde, festgelegt werden. Der verdrehbare Einsatz 36 weist Gewinde 72 an gegenüberliegenden Schenkeln des Einsatzes 36 auf, in welche die Führungsschrauben 43 für die Klemmbacken 41, 42 eingeschraubt werden.

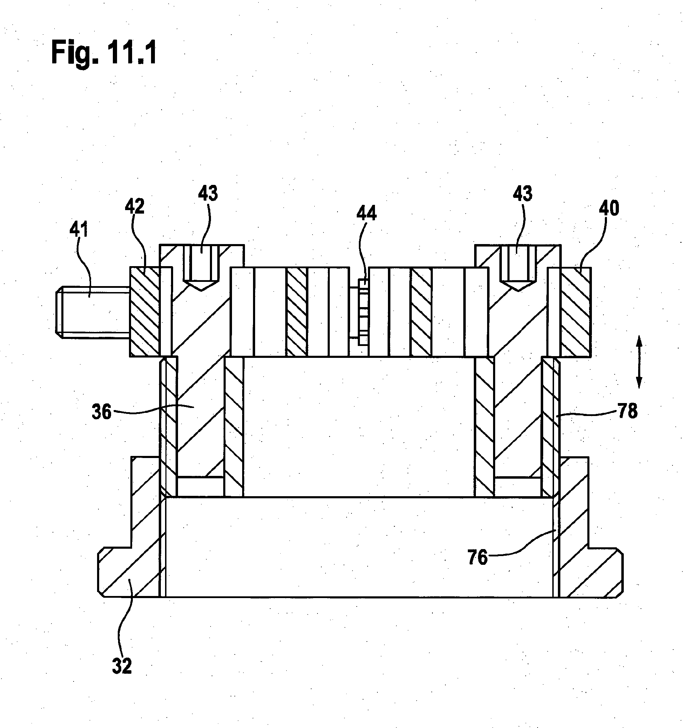

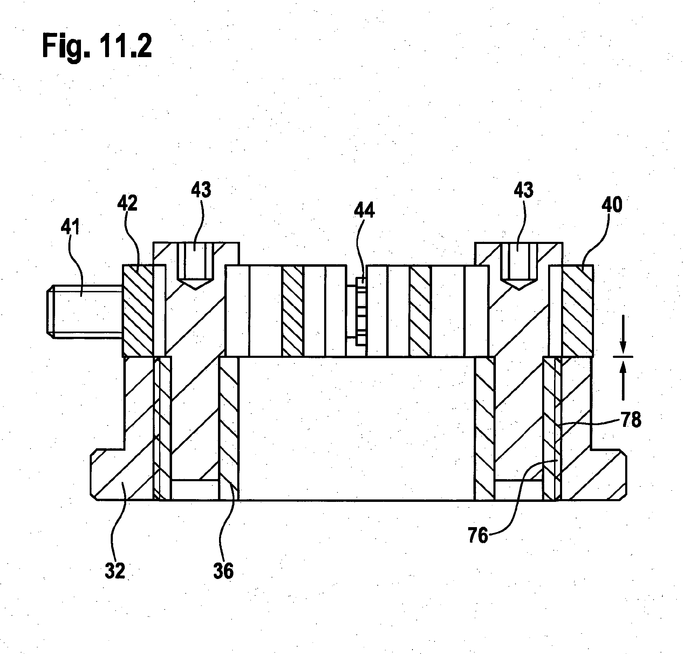

In den Figuren 11.1 und 11.2 sind Vertikalverschiebungen des verdrehbaren Einsatzes 36 der variablen Injektorhalterung 26 dargestellt.

Figur 11.1 stellt einen nur teilweise in die stationäre Halteplatte 32 eingeschraubten verdrehbaren Einsatz 36 dar. Ein vollständig eingeschraubter verdrehbarer Einsatz 36 ist in Figur 11.2 dargestellt. Die variable Injektorhalterung 26 weist in den beiden Darstellungen unterschiedliche Vertikalpositionen auf, deren Wegunterschied durch die Anzahl der Umdrehungen des verdrehbaren Einsatzes 36 und der Steigung der Gewinde 76, 78 gegeben ist. Die Haltebacken 40 und 42 sind über die Führungsschrauben 43 am verdrehbaren Einsatz 36 schwimmend gelagert und weisen horizontale Stellmöglichkeiten wie in den Figuren 5 und 6 dargestellt auf. Eine Horizontalverdrehung des verdrehbaren Einsatzes 36, wie in den Figuren 7.1 und 7.2 dargestellt, ist ebenfalls möglich, dabei sind die Horizontalverdrehung und die Vertikalverschiebung durch die Gewinde 76 und 38 miteinander verbunden. Bei vorgegebener Horizontalverdrehung kann die Vertikalverschiebung in Stufen von jeweils einer vollständigen Umdrehung des verdrehbaren Einsatzes 36 eingestellt werden.

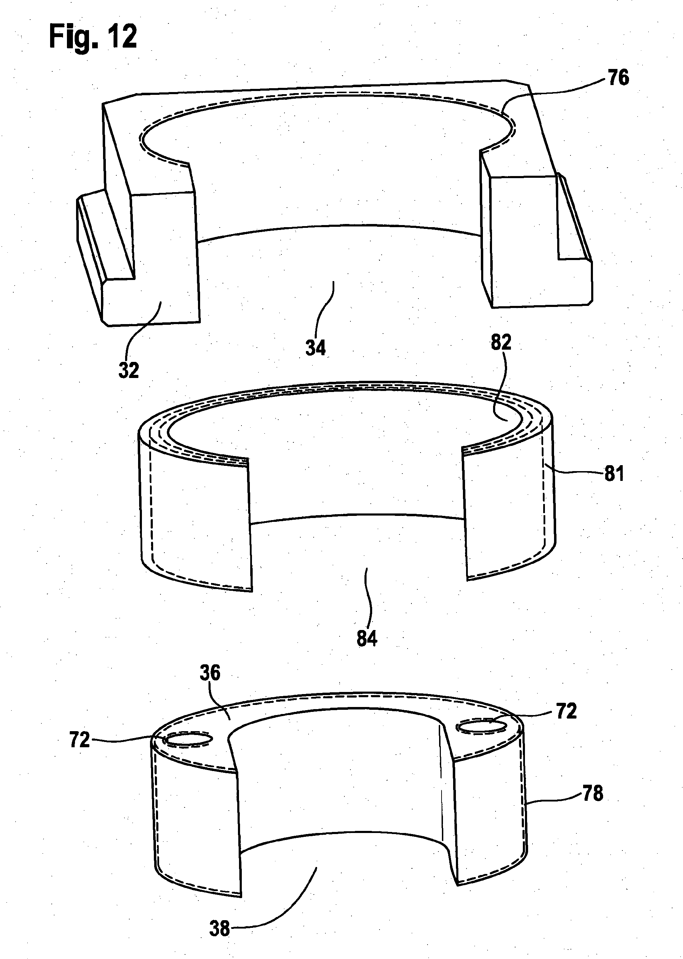

Der Darstellung der Figur 12 ist eine weitere Ausführungsform der variablen Injektorhalterung 26 dargestellt, bei der zwischen der stationären Halteplatte 32 und dem verdrehbaren Einsatz 36 ein Gewindering 80 aufgenommen ist.

In Figur 12 ist die stationäre Halteplatte 32 mit einem Innengewinde 76 dargestellt. In die stationäre Halteplatte 32 ist ein mit einem Außengewinde 81 versehener Gewindering 80 aufgenommen. Der Gewindering 80 weist zudem ein Innengewinde 82 auf, welches den mit einem Außengewinde 78 versehenen verdrehbaren Einsatz 36 aufnimmt. Der verdrehbare Einsatz 36, die Halteplatte 32 und der Gewindering 80 weisen Aussparungen 35, 38, 84 auf. Der Gewindering 80 kann vollständig oder teilweise in die stationäre Halteplatte 32 eingeschraubt werden. Gleichfalls kann der verdrehbare Einsatz 36 vollständig oder teilweise in den Gewindering 80 eingeschraubt werden. Durch ein teilweises Einschrauben des Gewinderings 80 oder des verdrehbaren Einsatzes 36 lässt sich die Höhe der variablen Injektorhalterung 26 einstellen. Dies erlaubt eine Verstellung der vertikalen Position eines eingespannten Kraftstoffinjektors 28 unabhängig von den Verstellmöglichkeiten der Einspritzkammer 14. Durch den aufgenommenen Gewindering 80 kann sowohl die Vertikalposition bzw. Höhe als auch die Horizontalverdrehung des verdrehbaren Einsatzes 36 stufenlos eingestellt werden. Die Vertikalverschiebung pro Umdrehung entspricht der Steigung des Gewindes. Diese kann durch die Wahl des Gewindetyps, wie beispielsweise Grob oder Feingewinde, festgelegt werden. Es ist möglich, für die Schraubverbindung zwischen der stationären Halteplatte 32 und dem Gewindering 80 eine andere Gewindesteigung zu wählen als für die Schraubverbindung zwischen Gewindering 80 und dem verdrehbaren Einsatz 36. Ebenso ist es möglich an dem Gewindering 80 nur ein Außen- oder ein Innengewinde vorzusehen, und die jeweils andere Seite gleitend zu lagern. Der verdrehbare Einsatz 36 weist Gewinde 72 an gegenüberliegenden Schenkeln des Einsatzes 36 auf, in welche die Führungsschrauben 43 für die Klemmbacken 41, 42 eingeschraubt werden.

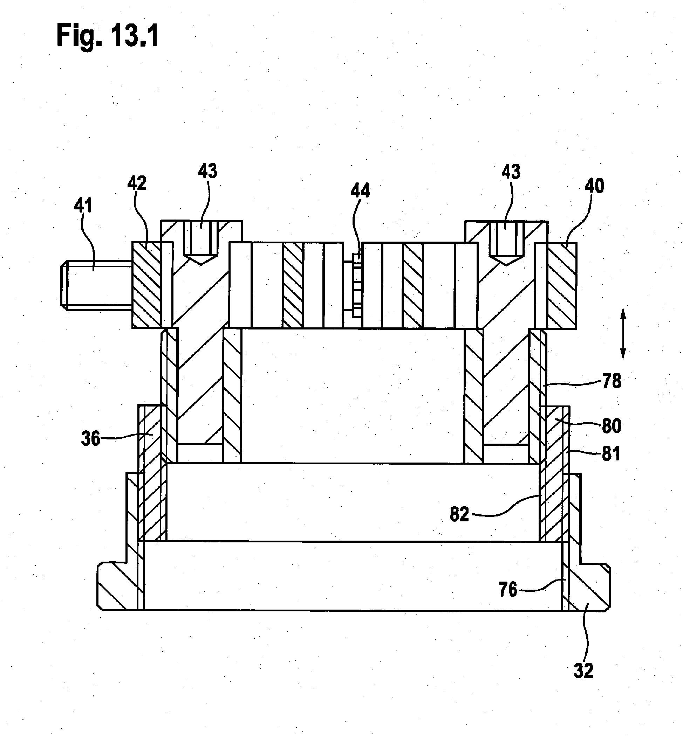

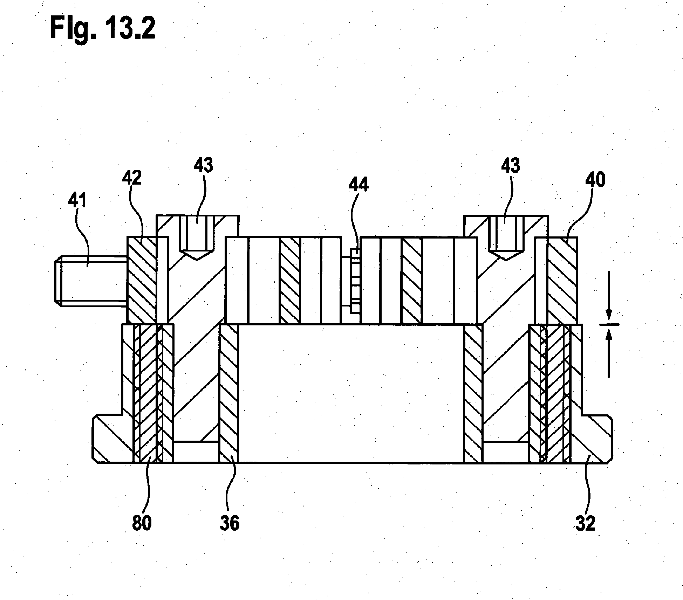

In den Figuren 13.1 und 13.2 sind Vertikalverschiebungen des verdrehbaren Einsatzes 36 der variablen Injektorhalterung 26 dargestellt.

Figur 13.1 stellt einen nur teilweise in die stationäre Halteplatte 32 eingeschraubten Gewindering 80 und einen nur teilweise in den Gewindering 80 eingeschraubten verdrehbaren Einsatz 36 dar. In Figur 13.2 ist die variable Injektorhaltung in der geringsten möglichen Vertikalposition dargestellt. Der verdrehbare Einsatz 36 ist vollständig in den Gewindering 80 eingeschraubt und dieser ist vollständig in die stationäre Halteplatte 32 eingeschraubt. Die variable Injektorhalterung 26 weist in den beiden Figuren 13.1 und 13.2 unterschiedliche Vertikalpositionen auf, deren Wegunterschied durch die Anzahl der Umdrehungen des verdrehbaren Einsatzes 36 bzw. des Gewinderings 80 und der Steigung der Gewinde 76, 78, 81 und 82 gegeben ist. Die Haltebacken 40 und 42 sind über die Führungsschrauben 43 am verdrehbaren Einsatz 36 schwimmend gelagert und weisen horizontale Stellmöglichkeiten wie in den Figuren 5 und 6 dargestellt auf. Eine Horizontalverdrehung des verdrehbaren Einsatzes 36, wie in den Figuren 7.1 und 7.2 dargestellt, ist ebenfalls möglich. Durch den Gewindering 80 wird die Horizontalverdrehung von der Vertikalverschiebung getrennt, so dass sich Horizontalverdrehung und die Vertikalposition stufenlos und voneinander unabhängig einstellen lassen.

Durch die erfindungsgemäß vorgeschlagene Lösung lässt sich eine erhebliche Kosteneinsparung, insbesondere durch Einsatz der variablen Injektorhalterung 26 erzielen. Die bisher erforderlichen vielen unterschiedlichen injektorspezifischen Halteplatten bzw. Adapter können ersatzlos entfallen, ebenso die Lagerhaltung hierfür. Aufgrund der erheblichen Reduzierung der an einem Injektorprüfstand 10 einzusetzenden Bauteile ergibt sich eine bessere Übersicht. Die Möglichkeit einer Horizontalverdrehung 66 durch Verdrehung des verdrehbaren Einsatzes 36 relativ zur stationären Halteplatte 32 der variablen Injektorhalterung 26 ermöglicht eine Positionierung des Kraftstoffinjektors in nahezu jedem Winkel. Dies ist insbesondere beim Anschließen von starren Prüfdruckleitungen von Vorteil. Durch die schwimmende Lagerung der Haltebacken 40 bzw. 42 lässt sich insbesondere der Kraftstoffinjektor 28 mittig positionieren. Die schwimmende Lagerung ermöglicht eine Ausrichtung des Kraftstoffinjektörs in Bezug auf die in der Regel vertikal positionierbare Einspritzkammer ohne dass deren seitliches Verschieben notwendig wäre, so dass eine lediglich lineare Führung der Einspritzkammer ausreicht, da Lagertoleranzen zwischen dem zu prüfenden Kraftstoffinjektor 28 und der lediglich in vertikale Richtung positionierbaren Einspritzkammer 14 aufgrund der schwimmenden Lagerung der Klemmbacken 40 bzw. 42 ausgeglichen werden können. Die Zusätzlich zur vertikalen Positionierung der Einspritzkammer 14 mögliche vertikale Verstellung der variablen Injektorhalterung 26 durch den Einsatz von Gewinden an der stationären Halteplatte 32, dem verdrehbaren Einsatz 36 oder an einem zusätzlichem Gewindering 80 erleichtert die exakte Justage des vertikalen Abstands zwischen Kraftstoffinjektor 28 und Einspritzkammer 14 und kann, wenn nur geringe Verstellwege erforderlich sind, Verstellmöglichkeiten an der Einspritzkammer 14 vollständig ersetzen.

## Patentansprüche

1. Injektorprüfstand (10) für Kraftstoffinjektoren (28) mit einer Aufnahme (24) zur Fixierung der Kraftstoffinjektoren (28) und einer relativ zum Kraftstoffinjektor (28) positionierbaren Einspritzkammer (14), **dadurch gekennzeichnet, dass** in der Aufnahme (24) eine variable Injektorhalterung (26) aufgenommen ist, die einen verdrehbaren Einsatz (36) mit mindestens einer verstellbaren Klemmbacke (40, 42) umfasst.

2. Injektorprüfstand (10) gemäß Anspruch 1, **dadurch gekennzeichnet, dass** die variable Injektorhalterung (26) eine Halteplatte (32) aufweist, in der der verdrehbare Einsatz (36) eingelassen ist.

3. Injektorprüfstand (10) gemäß Anspruch 1, **dadurch gekennzeichnet, dass** am verdrehbaren Einsatz (36) eine erste Klemmbacke (40) und eine zweite Klemmbacke (42) horizontal bewegbar aufgenommen sind.

4. Injektorprüfstand (10) gemäß dem vorhergehenden Anspruch, **dadurch gekennzeichnet, dass** zumindest eine der Klemmbacken (40, 42) gegen die jeweils andere mittels einer Spannschraube (41) vorspannbar ist.

5. Injektorprüfstand (10) gemäß Anspruch 3, **dadurch gekennzeichnet, dass** die Klemmbacken (40, 42) jeweils Öffnungen (52, 54) für Führungsschrauben (43) aufweisen, durch die die Klemmbacken (40, 42) am verdrehbaren Einsatz (36) gehalten sind.

6. Injektorprüfstand (10) gemäß Anspruch 3, **dadurch gekennzeichnet, dass** die Klemmbacken (40, 42) am verdrehbaren Einsatz (36) schwimmend gelagert sind.

7. Injektorprüfstand (10) gemäß Anspruch 2, **dadurch gekennzeichnet, dass** die Halteplatte (32) und der verdrehbare Einsatz (36) jeweils durchgängige Aussparungen (34, 38) aufweisen.

8. Injektorprüfstand (10) gemäß Anspruch 1, **dadurch gekennzeichnet, dass** der verdrehbare Einsatz (36) relativ zur Halteplatte (32) eine Horizontalverdrehung (66) in einem ersten Drehsinn (68) und/oder einem zweiten Drehsinn (70) ausführt.

9. Injektorprüfstand (10) gemäß Anspruch 1, **dadurch gekennzeichnet, dass** der verdrehbare Einsatz (36) einen Bund (48) aufweist, der an einer Seite der Halteplatte (32) anliegt.

10. Injektorprüfstand (10) gemäß Anspruch 2, **dadurch gekennzeichnet, dass** der verdrehbare Einsatz (36) ein Außengewinde (78) und die Halteplatte (32) ein Innengewinde (76) aufweist über welches der verdrehbare Einsatz (36) höhenverstellbar aufgenommen ist.

11. Injektorprüfstand (10) gemäß Anspruch 2, **dadurch gekennzeichnet, dass** zwischen dem verdrehbaren Einsatz (36) und der Halteplatte (32) ein Gewindering (80) aufgenommen ist, wobei der Gewindering (80) ein Innengewinde (82) und/oder ein Außengewinde (81) aufweist und die Halteplatte (32) und der verdrehbare Einsatz (36) auf der dem Gewindering (80) zugewandten Seite entweder ein entsprechendes Gegengewinde (76, 78) oder eine Gleitfläche aufweisen.

12. Injektorprüfstand (10) gemäß einem der vorhergehenden Ansprüche, **dadurch gekennzeichnet, dass** die Führungsschrauben (43) jeweils einen Werkzeugansatz (74) aufweisen und die Öffnungen (52, 54) in den Klemmbacken (40, 42) langlochförmig ausgeführt sind.

## Claims

1. Injector test bench (10) for fuel injectors (28) having a receptacle (24) for fixing the fuel injectors (28) and an injection chamber (14) which can be positioned relative to the fuel injector (28), **characterized in that** a variable injector holder (26) is received in the receptacle (24), which variable injector holder (26) comprises a rotatable insert (36) with at least one adjustable clamping jaw (40, 42).

2. Injector test bench (10) according to Claim 1, **characterized in that** the variable injector holder (26) has a holding plate (32), into which the rotatable insert (36) is let.

3. Injector test bench (10) according to Claim 1, **characterized in that** a first clamping jaw (40) and a second clamping jaw (42) are received horizontally movably on the rotatable insert (36).

4. Injector test bench (10) according to the preceding claim, **characterized in that** at least one of the clamping jaws (40, 42) can be prestressed against the respective other clamping jaw by means of a clamping screw (41).

5. Injector test bench (10) according to Claim 3, **characterized in that** the clamping jaws (40, 42) in each case have openings (52, 54) for guide screws (43), by way of which the clamping jaws (40, 42) are held on the rotatable insert (36).

6. Injector test bench (10) according to Claim 3, **characterized in that** the clamping jaws (40, 42) are mounted in a floating manner on the rotatable insert (36).

7. Injector test bench (10) according to Claim 2, **characterized in that** the holding plate (32) and the rotatable insert (36) in each case have continuous cutouts (34, 38).

8. Injector test bench (10) according to Claim 1, **characterized in that** the rotatable insert (36) performs a horizontal rotation (66) in a first rotational direction (68) and/or a second rotational direction (70) relative to the holding plate (32).

9. Injector test bench (10) according to Claim 1, **characterized in that** the rotatable insert (36) has a collar (48) which bears against one side of the holding plate (32).

10. Injector test bench (10) according to Claim 2, **characterized in that** the rotatable insert (36) has an external thread (78) and the holding plate (32) has an internal thread (76), via which the rotatable insert (36) is received in a height-adjustable manner.

11. Injector test bench (10) according to Claim 2, **characterized in that** a threaded ring (80) is received between the rotatable insert (36) and the holding plate (32), the threaded ring (80) having an internal thread (82) and/or an external thread (81), and the holding plate (32) and the rotatable insert (36) having either a corresponding counterthread (76, 78) or a sliding face on the side which faces the threaded ring (80).

12. Injector test bench (10) according to one of the preceding claims, **characterized in that** the guide screws (43) have in each case one tool attachment (74), and the openings (52, 54) in the clamping jaws (40, 42) are of slot-shaped configuration.

## Revendications

1. Banc d'essai d'injecteur (10) pour injecteurs de carburant (28), comprenant un logement (24) pour la fixation des injecteurs de carburant (28) et une chambre d'injection (14) pouvant être positionnée relativement à l'injecteur de carburant (28), **caractérisé en ce qu'**un porte-injecteur variable (26) est reçu dans le logement (24), lequel porte-injecteur comporte un insert rotatif (36) pourvu d'au moins une mâchoire de serrage réglable (40, 42).

2. Banc d'essai d'injecteur (10) selon la revendication 1, **caractérisé en ce que** le porte-injecteur variable (26) comprend une plaque de retenue (32) dans laquelle est incorporé l'insert rotatif (36).

3. Banc d'essai d'injecteur (10) selon la revendication 1, **caractérisé en ce qu'**une première mâchoire de serrage (40) et une deuxième mâchoire de serrage (42) sont reçues de manière déplaçable horizontalement sur l'insert rotatif (36).

4. Banc d'essai d'injecteur (10) selon la revendication précédente, **caractérisé en ce qu'**au moins l'une des mâchoires de serrage (40, 42) peut être précontrainte contre l'autre mâchoire de serrage respective au moyen d'une vis de serrage (41).

5. Banc d'essai d'injecteur (10) selon la revendication 3, **caractérisé en ce que** les mâchoires de serrage (40, 42) comprennent des ouvertures respectives (52, 54) pour des vis de guidage (43) au moyen desquelles les mâchoires de serrage (40, 42) sont retenues sur l'insert rotatif (36).

6. Banc d'essai d'injecteur (10) selon la revendication 3, **caractérisé en ce que** les mâchoires de serrage (40, 42) sont montées flottantes sur l'insert rotatif (36).

7. Banc d'essai d'injecteur (10) selon la revendication 2, **caractérisé en ce que** la plaque de retenue (32) et l'insert rotatif (36) comprennent des évidements débouchants (34, 38) respectifs.

8. Banc d'essai d'injecteur (10) selon la revendication 1, **caractérisé en ce que** l'insert rotatif (36) effectue relativement à la plaque de retenue (32) une rotation horizontale (66) dans un premier sens de rotation (68) et/ou un deuxième sens de rotation (70).

9. Banc d'essai d'injecteur (10) selon la revendication 1, **caractérisé en ce que** l'insert rotatif (36) comprend un rebord (48) qui s'applique contre un côté de la plaque de retenue (32).

10. Banc d'essai d'injecteur (10) selon la revendication 2, **caractérisé en ce que** l'insert rotatif (36) comprend un filetage extérieur (78) et la plaque de retenue (32) comprend un filetage intérieur (76) par le biais duquel l'insert rotatif (36) est reçu de manière réglable en hauteur.

11. Banc d'essai d'injecteur (10) selon la revendication 2, **caractérisé en ce qu'**une bague filetée (80) est reçue entre l'insert rotatif (36) et la plaque de retenue (32), la bague filetée (80) comprenant un filetage intérieur (82) et/ou un filetage extérieur (81), et la plaque de retenue (32) et l'insert rotatif (36) présentant, sur le côté tourné vers la bague filetée (80), soit un contre-filetage correspondant (76, 78) soit une surface de glissement.

12. Banc d'essai d'injecteur (10) selon l'une quelconque des revendications précédentes, **caractérisé en ce que** les vis de guidage (43) comprennent respectivement une embase pour outil (74) et les ouvertures (52, 54) dans les mâchoires de serrage (40, 42) sont réalisées en forme de trous oblongs.
